# EUROPEAN PATENT SPECIFICATION

(11) **EP 2 762 258 B1**
(45) Date of publication and mention of the grant of the patent: **25.01.2017**
(21) Application number: 14000377.3
(22) Date of filing: 03.02.2014
(51) Int. Cl.: B23K 11/11, B23K 11/31, F15B 11/036, F15B 11/12, F15B 15/24

(54) **FLUID OPERATED ACTUATOR, PARTICULARLY FOR CONTROLLING THE RELATIVE MOVEMENT OF THE ELECTRODE HOLDER ARMS OF A RESISTANCE SPOT WELDING GUN**
DRUCKMITTELBETRIEBENER ANTRIEB, INSBESONDERE ZUM STEUERN DER RELATIVBEWEGUNG VON EINEM ELEKTRODENHALTERARMS EINER WIDERSTANDS-PUNKTSCHWEISSZANGE
ACTIONNEUR ACTIONNÉ PAR FLUIDE, EN PARTICULIER POUR CONTRÔLER LE MOUVEMENT RELATIF DES BRAS PORTE-ÉLECTRODES D'UNE PINCE DE SOUDAGE PAR POINTS

(30) Priority: 04.02.2013 IT TO20130090
(43) Date of publication of application: 06.08.2014
(73) Proprietor: KGR S.p.A., 10032 Brandizzo (Torino) (IT)
(72) Inventor: Simioli, Marco, 10040 Almese (Torino) (IT)
(74) Representative: Cian, Paolo

(56) References cited:
- EP-A1- 1 398 105
- DE-A1-102006 011 637
- DE-U1- 9 315 211
- GB-A- 1 447 555
- US-A1- 2005 274 698
- US-B1- 6 474 215

## Description

The present invention relates to resistance spot welding guns, usable for welding body elements of motor vehicles, such as welding guns adapted to be suspended and operated manually by an operator during a welding operation, or the welding guns adapted to be operated by a robotized manipulation device such as a robot arm.

For example, a welding gun of the type mentioned above is the subject of the European patent application EP-2 228 162, in the name of the same Applicant.

Usually, welding guns are used during a same welding operation to make a plurality of welding points on the workpiece or workpieces to be welded, by welding electrodes carried by the arms of the gun. To control the relative movement of the electrode holder arms of the gun, it is convenient to use a driving device that allows the respective arms, and therefore the welding electrodes connected to them, to assume a fully open position in which the electrodes are separated by a relatively large distance, and a partially open position in which the electrodes are separated by a relatively small distance, in addition to the closed position of the electrodes, corresponding to the position in which a welding is carried out.

When the arms of the gun are in their fully open position, the gun can be brought closer to the workpiece to be welded, while in the partially open position the gun can be moved between one area and another of the workpiece where the various welding points have to be made.

After having carried out all the predetermined welding points on a workpiece, passing each time from the closed position to the partially open position of the arms, and vice-versa, the arms of the gun are brought again to the fully open position so that the welded piece can be removed easily, and a new workpiece can be introduced between them.

In order to carry out welding operations of a workpiece, welding guns can be used having a known structure either of the so-called "fulcrum" type, that is X-shaped, in which the electrode holder arms of the gun perform a scissor movement, or of the so-called "slide" type, or C-shaped, in which a stationary arm is hook shaped and the other arm, having a rectilinear shape, performs a linear translation movement.

In particular, the invention relates to a fluid actuator the driving of which allows the arms of the welding gun to be controlled so that they can assume the aforesaid fully open, partially open and closed positions, having the features mentioned in the preamble of appended claim 1.

An actuator of the type mentioned above is disclosed by EP-1 398 105. This actuator comprises a body including a main cylinder provided with a main rod fixed to a piston and having a first end that projects outside the body, which is axially movable between a retracted position and an extracted position so as to control the relative movement of the electrode holder arms of the gun to which the actuator is associated. The body of the actuator includes also at least one secondary cylinder, in the chamber of which a respective piston is axially and slidably mounted, which is associated with a secondary rod coaxial to the main rod. The secondary rod can be connected to the main rod by a releasable axial locking device that comprises a series of movable balls and is interposed between the main rod and the secondary rod. The actuator disclosed by this document also comprises locking means to lock the main piston in a desired position.

Moreover, DE-93 15 211 U1, which could be read in combination with the document referred to above, with reference to the aforesaid locking means, discloses a fluid operated actuator, particularly for controlling the relative movement of the electrode holder arms of a resistance spot welding gun, comprising a body including a main cylinder provided with a main rod having a first end projecting outside the body to control the relative movement of said electrode holder arms, and at least one secondary cylinder in the chamber of which a respective secondary piston is axially and slidably mounted, which secondary piston is fixed to a secondary rod, wherein the main rod is associated with a main piston unit that is axially and slidably mounted in a chamber of the main cylinder, which main piston unit comprises an auxiliary cylinder in the chamber of which an auxiliary piston is axially slidably mounted, which auxiliary piston is fixed to a second end of said main road.

The main purpose of the invention is to propose a fluid actuator for a welding gun, which is particularly effective and reliable in operation, and which can be used in welding guns having a "fulcrum" structure, or in welding guns having a "slide" structure.

This purpose is achieved by a fluid actuator having the features mentioned in the appended claims.

By virtue of the fact that the main rod is associated with a main piston unit that is axially and slidably mounted in a chamber of the main cylinder, which main piston unit comprises an auxiliary cylinder in the chamber of which an auxiliary piston, which is fixed to a second end of said main rod, is axially and slidably mounted, and of the fact that the locking means of the invention are associated with the auxiliary cylinder to lock the auxiliary piston with respect to the auxiliary cylinder in its end-of-stroke position on the side opposite to said at least one secondary cylinder, the actuator of the invention has a structure very reliable and effective in operation, which allows extremely high forces to be transferred to the electrode holder arms of the welding gun provided with the actuator.

According to the invention, the chamber of the auxiliary cylinder communicates, on a first side of the auxiliary piston opposite to said at least one secondary cylinder, with the chamber of the main piston through at least one one-way valve that is adapted to allow said fluid to flow from the chamber of the auxiliary cylinder to the chamber of the main piston, and, on the other side of the auxiliary piston, with a service duct passing through the secondary rod of said at least one secondary cylinder.

According to a preferred feature, the first end of the main rod has a threaded portion that can be engaged into an internal thread connected to a control member for controlling the relative position of said electrode holder arms, and the second end of the main rod has a maneuver formation that can be engaged by a correspondingly shaped tool in order to cause a rotation of the main rod about its own axis, with the aim of finely adjusting a relative position of the electrode holder arms of the welding gun, which maneuvering tool being insertable through a service duct to reach said maneuver formation, after having removed a removable cover associated with the body of the actuator at its axial end opposite to the main cylinder.

In this manner, the actuator of the invention allows a very precise adjustment of the position of the electrodes to be obtained in a simple manner, in particular with reference to their welding position, which allows to obtain optimum quality weldings.

The invention will be more apparent from the following detailed description, referred to the appended drawings, provided by way of non-limitative example, and in which:
- Figure 1 is a schematic perspective view of a welding gun provided with an actuator according to the invention,
- Figure 2 is a sectional side elevational view of the actuator of the gun of Figure 1 in a first step of its operation, which corresponds to the fully open position of the electrode holder arms of the gun to which the actuator is associated,
- Figures 3 to 5 are views similar to Figure 2, showing, in sequence, respective steps of the operation of the actuator when passing from the fully open position of the electrode holder arms to their partially open position,

- Figure 6 is a view similar to Figure 2, showing the actuator in its configuration corresponding to the closed position of welding of the electrode holder arms,
- Figure 7 is a view similar to Figure 2, showing the return step of the actuator to the configuration corresponding to the partially open position of the electrode holder arms, starting from their closed position,
- Figures 8 to 11 are views similar to Figure 2, showing, in sequence, respective steps of the operation of the actuator when passing from the partially open position of the electrode holder arms to their fully open position,
- Figure 12 is a view similar Figure 2, showing the actuator returned to the fully open position of its electrode holder arms, and
- Figures 13 to 16 are views similar to Figures 2, 5, 6 and 7, respectively, showing a modification of the actuator of the invention that includes a secondary cylinder that consists of a plurality of stages.

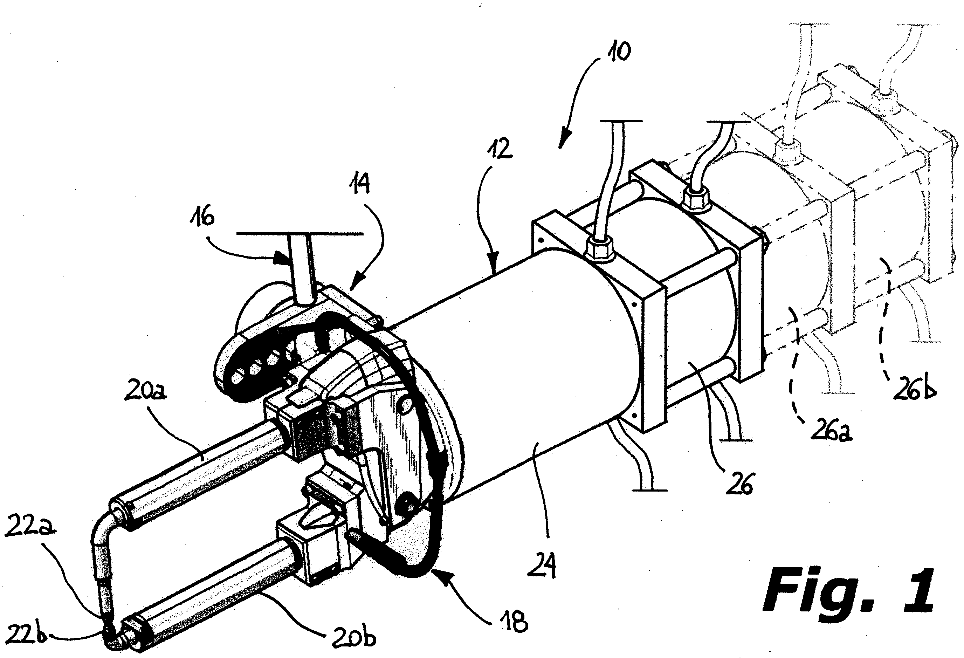

With initial reference to Figure 1, a resistance spot welding gun, indicated 10 as a whole, is provided with a typically pneumatically operated fluid actuator according to the invention, generally indicated 12. The gun 10 is, for example, of the type adapted to be controlled manually by an operator, and, for this purpose, its intermediate portion 14 is provided with a barycentric support and articulation system generally indicated 16, and with a grip and maneuver handle 18.

The actuator 12 allows the relative movement of a pair of electrode holder arms 20a and 20b to be controlled, which are provided with respective welding electrodes 22a and 22b.

Although the gun 10 shown in Figure 1 is of the type known having a so-called "fulcrum", or X-shaped, structure in which the two electrode holder arms 20a and 20b perform a scissor movement, it could be either of the type known having a "slide", or C-shaped, structure in which one of the two arms, that is hook-shaped, is stationary, while the other arm, having a rectilinear shape, is intended to perform a linear reciprocating movement of translation.

The body 12 of the actuator includes a main cylinder 24 and at least one secondary cylinder 26, being provided the possibility to make the secondary cylinder according to a modification comprising a plurality of stages 26, 26a and 26b, which will be referred to in the following of the description.

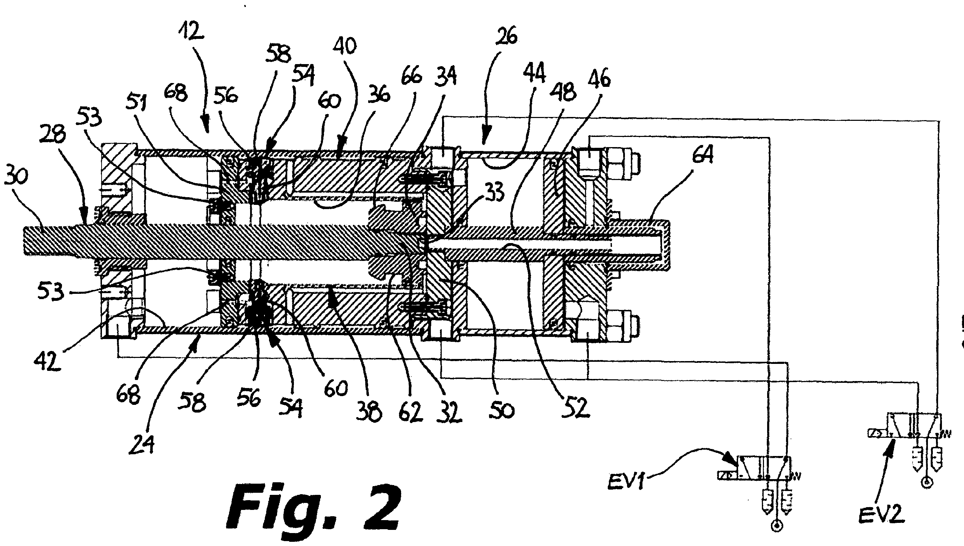

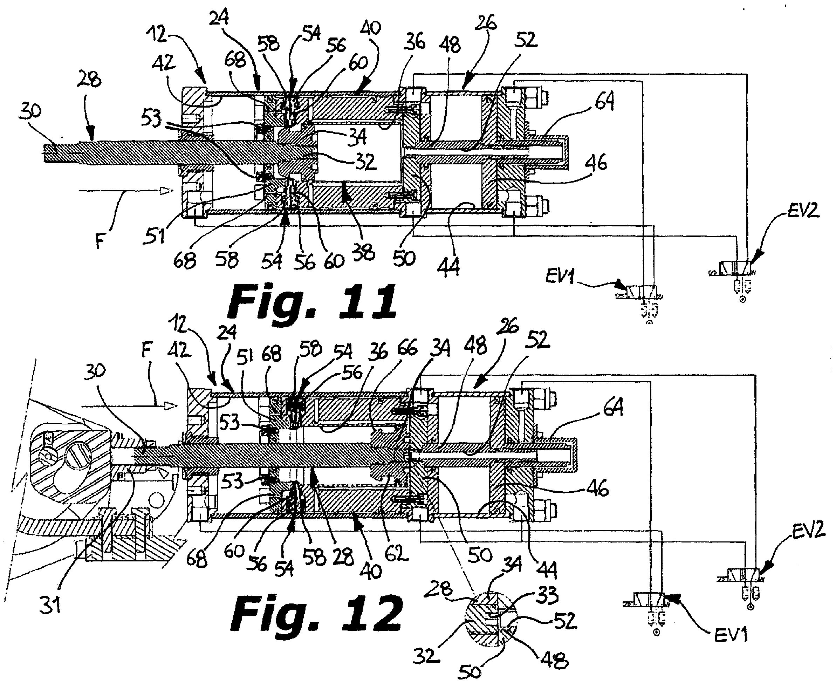

With reference to Figures 2 to 12, which refer to the version of the secondary cylinder made by a single stage, the main cylinder 24 comprises a main rod 28 having a first end 30 that projects outside the body of the actuator 12 (to the left, with reference to the Figures). This end is connected in a manner known per se, typically by means of levers in the case of a gun having a "fulcrum" structure, to control the relative movement of the electrode holder arms 20a and 20b. In particular, the end 30 has a threaded portion that can be engaged within an internal thread 31 (see Figure 12) connected to a control member for controlling the relative position of the arms 20a and 20b of the gun 10.

The second end 32 of the main rod 28 is fixed to an auxiliary piston 34 that is axially and slidably mounted in a chamber 36 of an auxiliary cylinder 38 being part of a main piston unit 40 axially and slidably mounted in a chamber 42 of the main cylinder 24.

The secondary cylinder 26 extends from the body of the actuator 12 coaxially to the main cylinder 24, at its end opposite to that from which the end 30 of the main rod 28 projects. It includes a chamber 44 in which a secondary piston 46 is axially and slidably mounted, which secondary piston is rigidly connected to a rod 48 fixed to a bottom wall 50 of the main piston unit 40 on the side opposite to the piston 46, such a bottom wall 50 delimiting axially the auxiliary cylinder 38 together with an opposite head wall 51. The secondary rod 48, having a tubular shape, has an axial through cavity 52 that defines a service duct to allow fluid to pass to the chamber 36 of the auxiliary piston 38, and for other purposes that will be better clarified in the following.

The main rod 28, at its second end 32 opposite to the first end 30, has a maneuver formation 33, for example socket head shaped, in order to allow it to be engaged by a tool (not shown) having a corresponding shape, and to cause, as a result of the rotation of the tool, a corresponding rotation of the main rod 28 about its own axis, so as to allow the axial distance between the internal thread 31 and the auxiliary piston 34, and therefore the relative position of the electrode holder arms 20a and 20b, to be finely adjusted, with the aim of adjusting their mutual position in the welding step. In order to allow the formation of maneuver 33 to be reached by the maneuver tool, the latter can be inserted through the service duct 52 after having removed a removable cover associated with the body of the actuator 12, at its axial end opposite to the main cylinder 24.

Moreover, the chamber 36 of the auxiliary cylinder 38 communicates with the chamber 42 of the main cylinder 24, at a first end thereof opposite to the secondary cylinder 26, through at least one one-way valve 53 associated with the wall 51, so as to allow the fluid admitted in the actuator 12 to flow from the chamber 36 of the auxiliary piston 38, only to the chamber 42 of the main cylinder 24.

Locking means are associated with the auxiliary cylinder 38, which comprise at least one plug member adapted to lock the relative auxiliary piston 34 with respect to the auxiliary cylinder 38 in its end-of-stroke position on the side opposite to the secondary cylinder 26, in order to allow the main piston assembly 40 to be unified so as to constitute, in one step of the operation of the actuator 12, a single unit having the function of a piston for the main cylinder 24.

These locking means preferably comprise a pair of plug members 54, which are arranged on diametrically opposite sides with respect to the main rod 28, and are movable radially with respect to it. The plug members 54 are adapted to cooperate with a radial seat 62 formed on the outer radial surface of the auxiliary piston 34, with the aim of locking axially the piston 34 with respect to the main piston unit 40.

Each plug member 54 comprises an enlarged head portion 56 slidably and sealingly mounted in a respective radial chamber 58 formed in the body of the auxiliary cylinder 38, from which head portion a bar portion 60 extends toward the main rod 28, which is provided with a counter formation at its end opposite to the head portion 54. Each of such counter formations of the bar portions 60, has a tilted front surface, the inclination of which corresponds to that of another tilted surface 66 formed on the auxiliary piston 34 close to the seat 62, on its side opposite to the secondary cylinder 26.

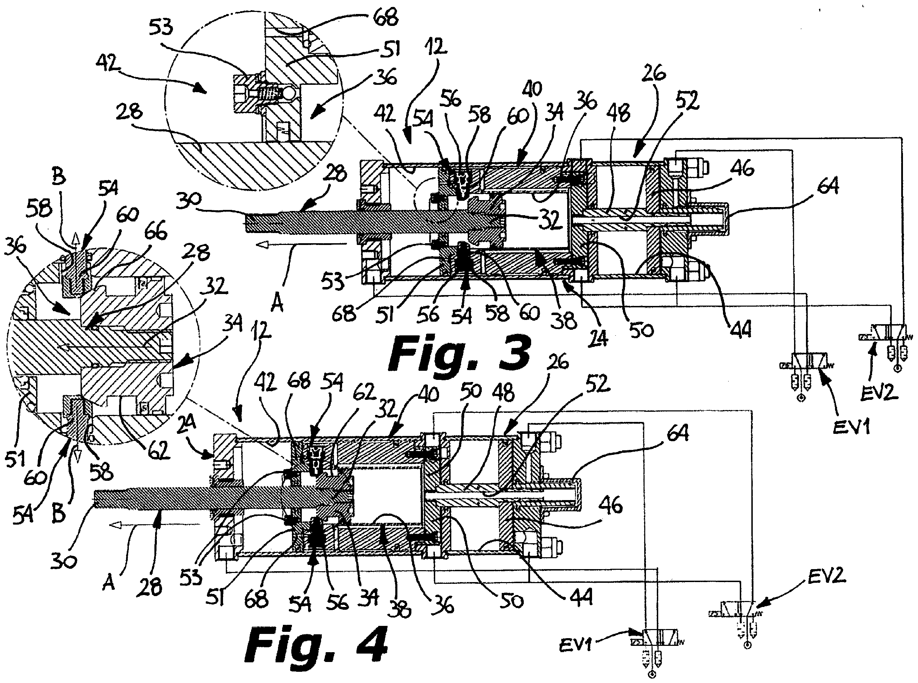

As a result of the axial displacement of the main rod 28, of the reciprocal engagement and of the sliding, one on the other, of the tilted surfaces of the bar portions 60 of the plug members 54 and of the tilted surface 66 of the auxiliary piston 34, the plug members 54 undergo a radial displacement along the direction of the arrows B of Figure 4, in the direction of removal from the main rod 28, as will be explained in a greater detail below.

Each radial chamber 58 has a first end radially outer with respect to the main rod 28, which is connected to the service duct 52 through channels formed inside the body of the auxiliary cylinder 38. The second end of each chamber 58, arranged in a radially inner position, communicates with the chamber 42 of the main cylinder 24 through axial openings 68 formed in the head wall 51 of the auxiliary cylinder 38.

The actuator 12 is associated, by respective ducts, with a first solenoid valve EV1, or approaching solenoid valve, and with a second solenoid valve EV2, or welding solenoid valve, both of the two-position slide type, with elastic return.

The solenoid valve EV1 is connected, on one side, to one end of the chamber 42 of the main cylinder 24 facing away the secondary cylinder 26, and, on the other side, through the service duct 52, to one end of the chamber 36 of the auxiliary cylinder 38 facing the secondary cylinder 26. In this manner, when the end of one of such chambers 42 or 36 is connected to a source of pressurized fluid through the solenoid valve EV1, the end of the other chamber 36 or 42 is connected to the drain.

The solenoid valve EV2 is connected, on one side, both to the end of the chamber 42 of the main cylinder 24 facing the secondary cylinder 26, and to the end of the chamber 44 of the secondary cylinder 26 facing away the main cylinder 24, and, on the other side, with the end of the secondary cylinder 26 facing the main cylinder 24. In this manner, when the aforesaid end of the chambers 42 and 44 is connected to the source of pressurized fluid through the solenoid valve EV2, the aforesaid end of the secondary cylinder 26 is connected to the drain, and vice-versa.

The operation of the actuator 12, with specific reference to Figures 2 to 12 and to the orientation of their parts as shown, takes place in the following manner.

Starting from the condition shown in Figure 2, representing the fully retracted position of the main rod 28 with respect to the body of the actuator 12, which corresponds to the fully open configuration of the arms 20a and 20b of the gun 10, the solenoid valves EV1 (of approaching) and EV2 (of welding) are in their resting positions in which the left side of the chamber 42 of the main cylinder 24 and the left side of the chamber 44 of the secondary cylinder 26, are fed by the pressurized fluid and the main piston unit 40, the auxiliary piston 34 of the auxiliary cylinder 38, and the piston 46 of the secondary cylinder 26 are arranged to the right side of Figure 2. In this condition, the service duct 52 is connected to the drain, as well as the radially outer ends of the chambers 58 of the plug members 54, while the radially inner ends of the chambers 58 receive pressurized fluid from the right side of the chamber 42 of the main cylinder 24 through the openings 68 of the head wall 51, whereby the plug members 54 are urged towards their radially outer position, that is spaced from the main rod 28.

The solenoid valve EV1 is then switched to its position in which the source of pressurized fluid communicates both with the chamber 36 of the auxiliary cylinder 38, through the service duct 52, and with the radially outer end of the chambers 58, and in which the left part of the chamber 42 of the main piston 24 is connected to the drain (figure 3). In this configuration, the plug members 54 move radially toward the main rod 28 and the auxiliary piston 34 starts to move to the left along the chamber 36 of the auxiliary cylinder 38, causing the one-way valves 53 to open, through which the fluid present on the left side of the chamber 36 passes gradually into the left side of the chamber 42 of the main cylinder 24. As a consequence, the main rod 28 starts to move in the direction shown by arrow A of Figure 3, and gradually extends outside the body of the actuator 12, in order to bring the arms 20a and 20b toward their partially open position.

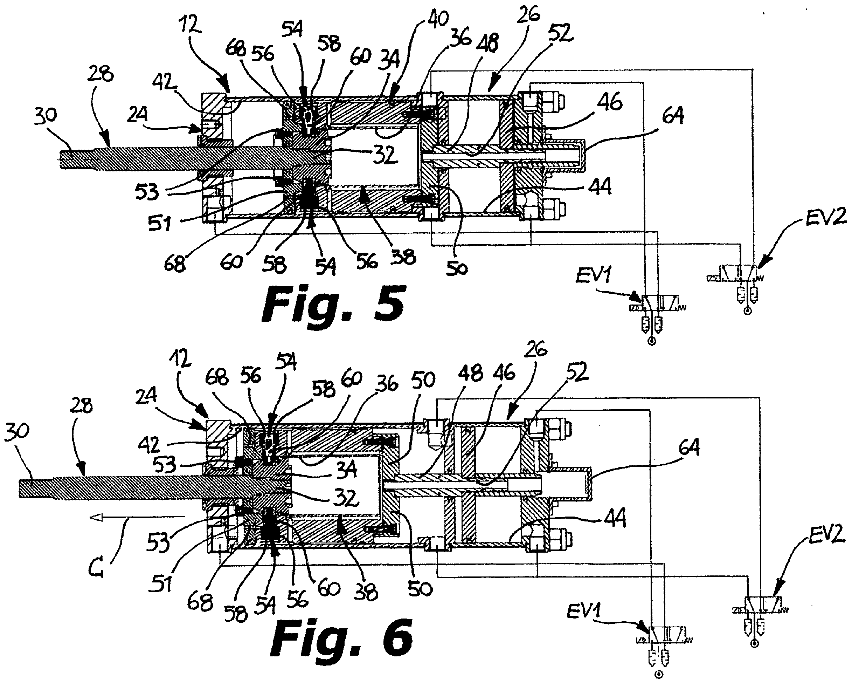

As a result of a further axial displacement of the main rod 28 (arrow A of Figure 4) and of the auxiliary piston 34 along the chamber 36, the tilted surface 66 of the auxiliary piston 34 reaches the contact with the front tilted surfaces of the ends of the bar portions 60 of the plug members 54, and such tilted surfaces start to slide relatively so as to cause a radial removal of the plug members 54 with respect to the main rod 28, along the direction of arrows B of Figure 4, until the ends of the bar portions 60 of the plug members 54 fall into the radial seat 62 of the auxiliary piston by engaging it, as a result of reaching, by the auxiliary piston 34, of an abutment position against the head portion 51 of the auxiliary cylinder 38 (Figure 5). In this configuration, the auxiliary piston 34 is axially locked by the plug members 54 with respect to the auxiliary cylinder 38, which then behaves as a single unit, the arms 20a, 20b of the gun 10 being in their partially open position.

The solenoid valve EV2 is then moved in order to connect the right side of the chamber 44 of the secondary cylinder 26 with the source of pressurized fluid, and to connect the left side of the same secondary cylinder 26 to the drain (Figure 6). As a result of this configuration of the solenoid valve EV2, the auxiliary cylinder 38, together with the piston 34 that is locked with respect to it, begins to move to the left along the main cylinder 24 so that the main rod 28 moves of a further stroke to the left along the direction of arrow C of Figure 6, up to bring the arms 20a and 20b of the gun 10 in their closed configuration of welding.

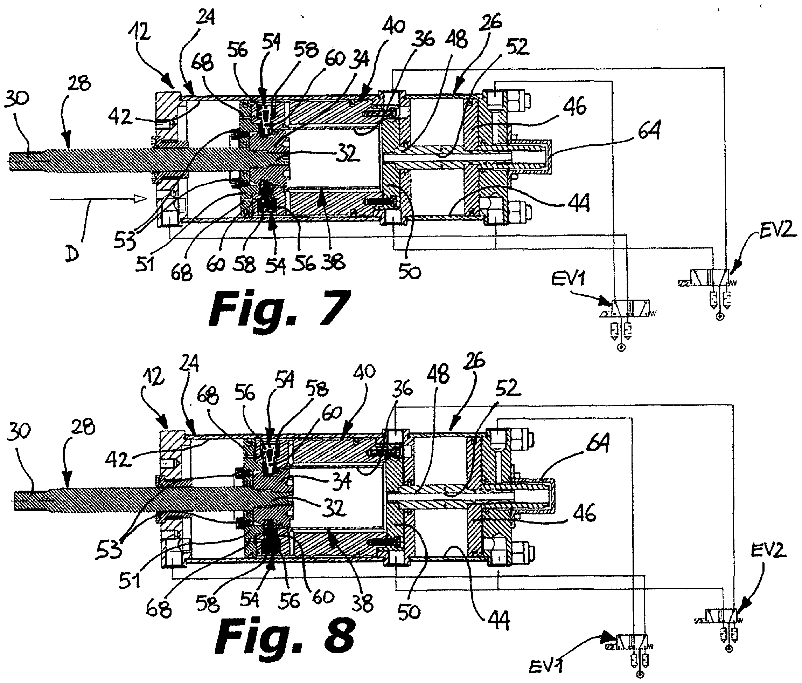

After having performed the welding, the solenoid valve EV2 is moved again to its position of Figure 5 so as to connect the source of pressurized fluid to the left side of the chamber 44 of the secondary cylinder 26 and to connect the right side of this chamber 44 to the drain, in such a manner that the whole auxiliary cylinder 38 moves together with the piston 46 of the secondary cylinder to the right, causing a retraction of the main rod 28 along the direction of arrow D of Figure 7, so as to bring again the arms 20a and 20b to their partially open position. In this configuration, both the left and right sides of the chamber 42 of the main cylinder 24 are connected to the drain, via the solenoid valves EV1 and EV2, respectively.

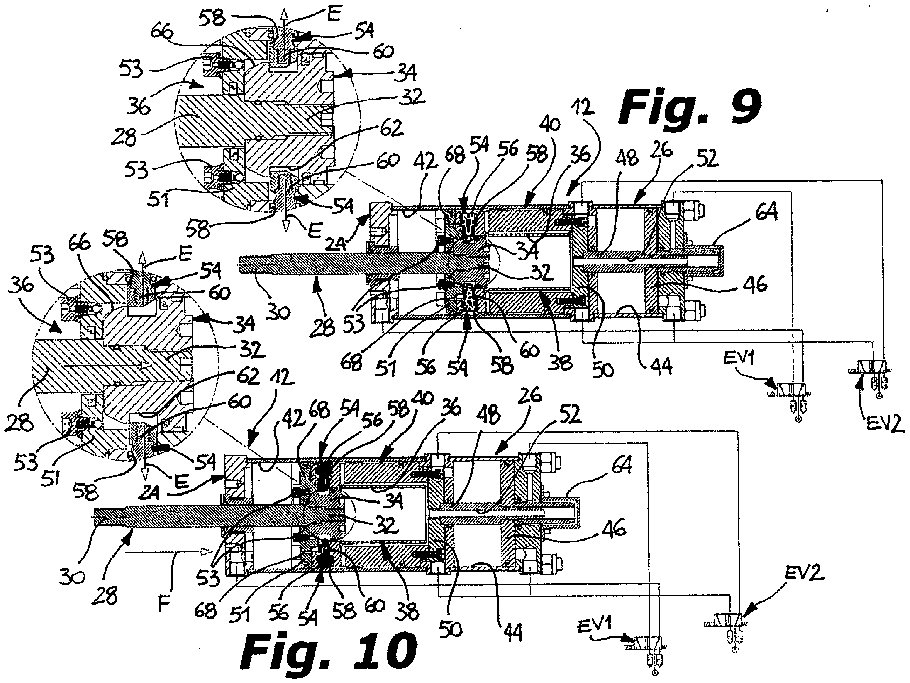

In order to reach again the fully open position of the arms 20a and 20b, the solenoid valve EV1 is moved to connect the left side of the chamber 42 of the main piston 24 to the source of pressurized fluid, and to connect the right side of the chamber 36 of the auxiliary piston 38 to the drain (Figure 8). In this configuration, fluid under pressure is fed from the chamber 42 to the radially inner ends of the radial chambers 58 of the plug members 54 through the openings 68 of the wall 51, in order to cause the radial displacement of the plug members 54 to the outside, along the direction of arrows E of figure 9, in such a manner that they disengage the radial seat 62 to release the relative movement of the auxiliary piston 34 with respect to the auxiliary cylinder 38. In this manner, the movement of retraction of the main rod 28 to the right starts, as shown by arrow F of Figures 10 to 12, to bring it into the fully retracted configuration in which the auxiliary piston 34 abuts against the wall 50 of the auxiliary cylinder 38 (Figure 12), which corresponds to the fully open position of the arms 20a and 20b.

Once this position is reached, since the service duct 52 is connected to the drain, the cover 64 can be removed so as to access, by the aforementioned tool, to the maneuver formation 33 in order to finely adjust the position of the arms 20a and 20b by rotating the main rod 28 with respect to the internal thread 31.

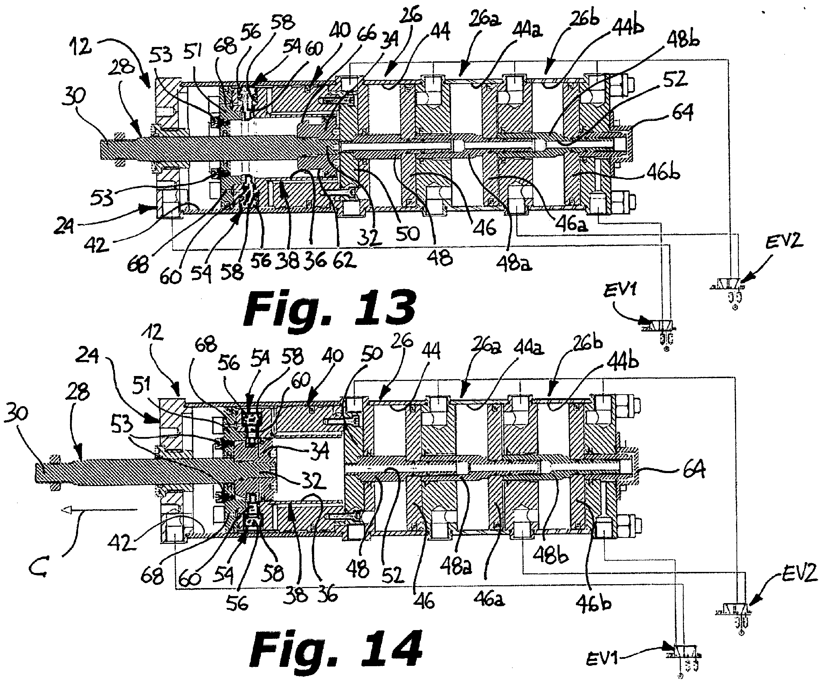

In particular, in the case of welding guns having a "fulcrum" structure in which the movement of the main rod 28 is transmitted to the electrode holder arms 20a and 20b by a lever device for the transmission of movement, or, anyway, when it is necessary to exert a particularly high pressure by means of the electrodes 22a and 22b during the welding step, it may be necessary to use a modification of the actuator 10 of the invention, in which the secondary cylinder is made by several stages, for example three, as shown in Figures 13 to 16, in which reference numerals equal or similar to those of the previous modification have been used to indicate parts identical or similar to it.

In particular, the actuator represented in these figures is provided with a secondary cylinder with three stages arranged coaxially, indicated 26, 26a and 26b, respectively, and provided with chambers 44, 44a and 44b in which the respective secondary pistons 46, 46a and 46b are slidably mounted. Each secondary piston 46, 46a and 46b is fixed to a respective tubular shaped secondary rod 48, 48a and 48b, the coaxial cavities of which define together the service duct 52.

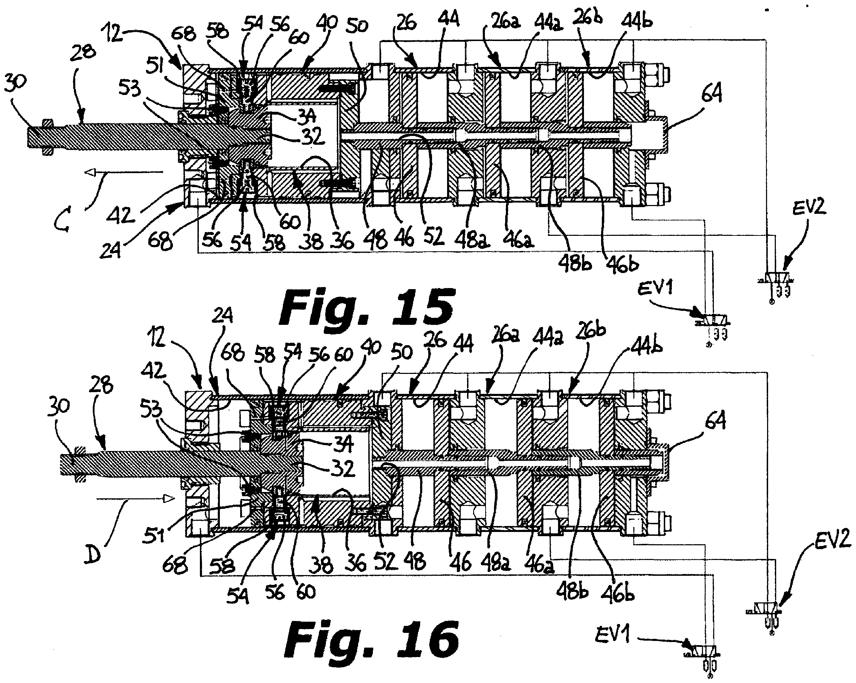

Conveniently, according to this modification, only the left side of the secondary chamber 44b of the cylinder 26b, that is the stage of the secondary cylinder farthest from the main cylinder 24 and further to the right in the figures, is fed by pressurized fluid through the solenoid valve EV2, while the right side of the same chamber 44b and of the other chambers 44 and 44a is connected to the drain, as shown in Figures 13, 15 and 16. This occurs during the movement of the arms 20a and 20b from their fully open position (Figure 13) to their partially open position (figure 14), as well as during the movement of the arms 20a and 20b from their closed position (Figure 15) to their fully open position, passing through the partially open position (figure 16).

As a result of the displacement of the solenoid valve EV2, pressurized fluid is fed to the right side of all the rooms 44, 44a and 44b of the stages 26, 26a and 26b of the secondary cylinder, only in the configuration of Figure 14, in which the main rod 28 moves from its position corresponding to the partially open position of the electrode holder arms 20a and 20b, towards its position corresponding to the closed position of the arms 20a and 20b (figure 15), in order to apply a higher pressure during both the closing step of the welding electrodes 22a and 22b carried by the arms 20a and 20b, and the welding step.

Since the configurations of the actuator 10 with the secondary cylinder in the multi-stage version, as shown in Figures 13, 14, 15 and 16, correspond to the conditions of operation of the actuator 10 of Figures 2, 5, 6 and 7, reference is made to such Figures and to the respective description for the understanding of the relevant operation.

## Claims

1. Fluid operated actuator, particularly for controlling the relative movement of the electrode holder arms of a resistance spot welding gun, comprising a body including a main cylinder (24) provided with a main rod (28) having a first end (30) projecting outside the body to control the relative movement of said electrode holder arms (20a, 20b), and at least one secondary cylinder (26, 26a, 26b) in the chamber (44, 44a, 44b) of which a respective secondary piston (46, 46a, 46b) is axially and slidably mounted, which secondary piston is fixed to a secondary rod (48), wherein the main rod (28) is connected to a main piston unit (40) that is axially and slidably mounted in a chamber (42) of the main cylinder (24),
**characterized in that** the main piston unit (40) comprises an auxiliary cylinder (38) in the chamber (36) of which an auxiliary piston (34), which is fixed to a second end (32) of said main rod (28), is axially and slidably mounted, the chamber (36) of the auxiliary cylinder (38) being adapted to communicate, respectively at opposite sides of the auxiliary piston (34), with the chamber (42) of the main cylinder (24) through at least one one-way valve (53) that is adapted to allow said fluid to flow from the chamber (36) of the auxiliary cylinder (38) to the chamber (42) of the main cylinder (24),
and with a service duct (52) passing through the secondary rod (48) of said at least one secondary cylinder (26, 26a, 26b), the auxiliary cylinder (38) being provided with locking means (54, 62) to lock the auxiliary piston (34) with respect to the auxiliary cylinder (38) in its end-of-stroke position on the side opposite to said at least one secondary cylinder (26, 26a, 26b), said locking means comprising at least one plug member (54) radially movable with respect to the main rod (28), and a radial seat (62) of the auxiliary piston (34), which is adapted to be engaged by said at least one plug member (54), each plug member (54) comprising an enlarged head portion (56) from which a bar portion (60) radially extends towards the main rod (28), which bar portion (60) is provided with a counter formation adapted to engage said seat (62), at its end opposite to said head portion (56), said head portion (56) being slidably and sealingly mounted in a respective radial chamber (58) formed in the body of the auxiliary cylinder (38), which radial chamber (58) has a radial outer end, with respect to the main rod (28), which is connected to said service duct (52), and a radial inner end communicating with the chamber (42) of the main cylinder (24) through openings (68) of the body of the auxiliary cylinder (38).

2. Actuator according to claim 1, **characterized in that** it comprises a first solenoid valve (EV1) and a second solenoid valve (EV2) connected by respective ducts, the first solenoid valve (EV1) being connected to a first end of the chamber (42) of the main cylinder (24), on the side opposite to said at least one secondary cylinder (26, 26a, 26b), and with a second end of the chamber (36) of the auxiliary cylinder (38), facing said at least one secondary cylinder (26, 26a, 26b), by said service duct (52), the second solenoid valve (EV2) being connected to a second end of the chamber (42) of the main cylinder (24), facing said at least one secondary cylinder (26, 26a, 26b), as well as with a second end of the chamber (44) of a secondary cylinder (26), on the side opposite to said main cylinder (24), and with a first end of said at least one secondary cylinder (26, 26a, 26b), facing the main cylinder (24).

3. Actuator according to claim 2, **characterized in that** it includes a plurality of secondary cylinders (26, 26a, 26b) each of which includes a respective secondary piston (46, 46a, 46b) fixed to a respective secondary rod (48, 48a, 48b) and mounted axially and slidably in a respective chamber (44, 44a, 44b) having a first end facing the main cylinder (24) and a second end facing the side opposite to the main cylinder (24), and in which said secondary rods (48, 48a, 48b) are fixed coaxially one to the other and are passed through by said service duct (52).

4. Actuator according to claim 3, **characterized in that** said second solenoid valve (EV2) is connected to all the chambers (44, 44a, 44b) of the secondary cylinders (26, 26a, 26b) on the side opposite to the main cylinder (24), and to the chamber (44) of the secondary cylinder (26b) farthest from the main cylinder (24), facing the main cylinder (24), as well as with the chamber (42) of the main cylinder (24) on its side facing said secondary cylinders (26, 26a, 26b).

5. Actuator according to any one of claims 1 to 4, **characterized in that** said locking means comprise a pair of plug members (54) arranged at diametrically opposite sides with respect to the main rod (28).

6. Actuator according to any one of claims 1 to 5, **characterized in that** a front surface (66) tilted with respect to the axis of the main rod (28) is formed on the radially outer surface of the auxiliary piston (34), and **in that** said counter formation of the bar portion (60) of each plug member (54) has a corresponding tilted surface, whereby said plug members (54) in operation undergo a movement along the outer radial direction with respect to the main rod (28), as a result of the axial movement of the main rod (28) and of the mutual sliding engagement between the tilted surfaces of the counter formations of the bar portions (60) of the plug members (54) and the tilted front surface (66) of the auxiliary piston (34).

7. Actuator according to any one of claims 1 to 6, **characterized in that** said first end (30) of the main rod (28) has a threaded portion that can be engaged into an internal thread (31) connected to a control member for controlling the relative position of said electrode holder arms (20a, 20b), and **in that** the second end (32) of the main rod (28) has a maneuver formation (33) suitable for being operated to cause rotation of the main rod (28) about its own axis for finely adjusting a relative position of the electrode holder arms (20a, 20b) of the welding gun (10), which can be reached in the absence of a removable cover (64) of the body of the actuator (12) at its axial end opposite to the main cylinder (24).

## Patentansprüche

1. Druckmittelbetriebenes Antriebsorgan, insbesondere zur Steuerung der Relativbewegung der Elektrodenhaltearme einer Widerstands-Punktschweißzange, umfassend ein Gehäuse (12) mit einem Hauptzylinder (24), in dem eine Hauptstange (28) mit einem ersten Ende (30) angeordnet ist, das für die Steuerung der Relativbewegung der Elektrodenhaltearme (20a, 20b) aus dem Gehäuse herausragt, und mit wenigstens einem Sekundärzylinder (26, 26a, 26b), in dessen Kammer (44, 44a, 44b) ein zugeordneter Sekundärkolben (46, 46a, 46b) axial verschiebbar gelagert ist, welcher fest mit einer Sekundärstange (48) verbunden ist, wobei die Hauptstange (28) mit einer Hauptkolbeneinheit (40) verbunden ist, die in einer Kammer (42) des Hauptzylinders (24) axial verschiebbar gelagert ist, **dadurch gekennzeichnet, dass** die Hauptkolbeneinheit (40) einen Hilfszylinder (38) hat, in dessen Kammer (36) ein an einem zweiten Ende (32) der Hauptstange (28) befestigter Hilfskolben (34) axial verschiebbar gelagert ist, wobei die Kammer (36) des Hilfszylinders (38) an den gegenüberliegenden Seiten des Hilfskolbens (34) einerseits über wenigstens ein Einwegventil (53) mit der Kammer (42) des Hauptzylinders (24), über das das Druckmedium von der Kammer (36) des Hilfszylinders (38) in die Kammer (42) des Hauptzylinders (24) strömt, und andererseits mit einem Servicekanal (52) kommuniziert, der durch die Sekundärstange (48) des wenigstens einen Sekundärzylinders (26, 26a, 26b) verläuft, wobei der Hilfszylinder (38) Blockiermittel (54, 62) aufweist zum Verriegeln des Hilfskolbens (34) relativ zum Hilfszylinder (38) in seiner Hubendstellung auf der dem Sekundärzylinder (26, 26a, 26b) abgewandten Seite und die Blockiermittel wenigstens ein Rastglied (54), das bezüglich der Hauptstange (28) radial beweglich ist, sowie einen in dem Hilfskolben (34) ausgebildeten Radialsitz (62) für den Eingriff des wenigstens einen Rastgliedes (54) haben, das einen erweiterten Kopf (56) aufweist, von dem sich radial in Richtung auf die Hauptstange (28) ein Stangenabschnitt (60) erstreckt, der an seinem von dem Kopf (56) abgewandten Ende ein der Form des Radialsitzes (62) entsprechendes Gegenprofil hat, wobei der Kopf (56) verschiebbar in einer Radialkammer (58) des Hilfszylinders (38) abgedichtet gelagert ist und die Radialkammer (58) ein bezüglich der Hauptstange (28) radial äußeres Ende, das mit dem Servicekanal (52) verbunden ist, sowie ein radial inneres Ende hat, das über Öffnungen (68) im Hilfszylinder (38) mit der Kammer (42) des Hauptzylinders (24) kommuniziert.

2. Antriebsorgan nach Anspruch 1, **dadurch gekennzeichnet, dass** es über Leitungen mit einen ersten Elektromagnetventil (EV1) und einem zweiten Elektromagnetventil (EV2) verbunden ist, wobei das erste Elektromagnetventil (EV1) mit einem ersten Ende der Kammer (42) des Hauptzylinders (24) auf der von dem Sekundärzylinder (26, 26a, 26b) abgewandten Seite und über den Servicekanal (52) mit einem zweiten, dem Sekundärzylinder (26, 26a, 26b) zugewandten Ende der Kammer (36) des Hilfszylinders (38) verbunden ist, während das zweite Elektromagnetventil (EV2) mit einem zweiten, dem Sekundärzylinder (26, 26a, 26b) zugewandten Ende der Kammer (42) des Hauptzylinders (24) und mit einem zweiten, an dem von dem Hauptzylinder (24) abgewandten Ende der Kammer (44) eines Sekundärzylinders (26) sowie mit einem ersten, dem Hauptzylinder (24) zugewandten Ende des Sekundärzylinders (26, 26a, 26b) verbunden ist.

3. Antriebsorgan nach Anspruch 2, **dadurch gekennzeichnet, dass** dieses eine Reihe von Sekundärzylindern (26, 26a, 26b) hat, von denen jeder einen Sekundärkolben (46, 46a, 46b) aufweist, der an einer zugeordneten Sekundärstange (48, 48a, 48b) befestigt und in einer entsprechenden Kammer (44, 44a, 44b) axial verschiebbar gelagert ist, welche ein erstes, dem Hauptzylinder (24) zugewandtes Ende und ein zweites, der gegenüberliegenden Seite des Hauptzylinders (24) zugewandtes Ende hat, wobei die Sekundärstangen (48, 48a, 48b) koaxial miteinander verbunden sind und die Serviceleitung (52) enthalten.

4. Antriebsorgan nach Anspruch 3, **dadurch gekennzeichnet, dass** das zweite Elektromagnetventil (EV2) auf der von dem Hauptzylinder (24) abgewandten Seite mit allen Kammern (44, 44a, 44b) der Sekundärzylinder (26, 26a, 26b) und mit der Kammer (44) des Sekundärzylinders (26b), welche am weitesten von dem Hauptzylinder (24) entfernt ist, sowie mit der Kammer (42) des Hauptzylinders (24) auf dessen den Sekundärzylindern (26, 26a, 26b) zugewandten Seite verbunden sind.

5. Antriebsorgan nach einem der Ansprüche 1 bis 4, **dadurch gekennzeichnet, dass** die Blockiermittel ein Paar von Rastgliedern (54) haben, die auf diametral gegenüberliegenden Seiten der Hauptstange (28) angeordnet sind.

6. Antriebsorgan nach einem der Ansprüche 1 bis 5, **dadurch gekennzeichnet, dass** eine zur Achse der Hauptstange (28) schräg verlaufende Vorderseite (66) auf der radial äußeren Fläche des Hilfskolbens (34) ausgebildet ist und dass das Gegenprofil des Stangenabschnitts (60) jedes Rastgliedes (54) eine entsprechend schräge Fläche hat, wodurch bei einer Axialverschiebung der Hauptstange (28) mit gegenseitigem Gleiteingriff zwischen den Schrägflächen der Gegenprofile der Stangenabschnitte (60) der Rastglieder (54) und der schräg verlaufenden Vorderseite (66) des Hilfskolbens (34) die Rastglieder (54) im Betrieb eine Verschiebung entlang ihrer zur Hauptstange (28) radialen Richtung ausführen.

7. Antriebsorgan nach einem der Ansprüche 1 bis 6, **dadurch gekennzeichnet, dass** das erste Ende (30) der Hauptstange (28) einen Gewindeabschnitt hat, der in eine Gewindebohrung (31) eingreift, die mit einem Steuerglied zur Steuerung der Relativstellung der Elektrodenhaltearme (20a, 20b) verbunden ist, und dass das zweite Ende (32) der Hauptstange (28) eine Schaltformation (33) hat, die im Betrieb eine Drehung der Hauptstange (28) um ihre eigene Achse ermöglicht zur Feineinstellung der Relativstellung der Elektrodenhaltearme (20a, 20b) der Schweißzange (10), was nach Abnahme eines Deckels (64) von dem Gehäuse des Antriebsorgans (12) an seinem vom Hauptzylinder (24) abgewandten Ende durchführbar ist.

## Revendications

1. Actionneur à fluide, notamment pour commander le mouvement relatif des bras support d'électrode d'un pistolet à souder par points, comprenant un corps comprenant un vérin principal (24) muni d'une tige principale (28) ayant une première extrémité (30) faisant saillie à l'extérieur du corps pour commander le mouvement relatif desdits bras (20a, 20b) de support d'électrode et au moins un vérin secondaire (26, 26a, 26b) dans la chambre (44, 44a, 44b) dont un piston secondaire respectif (46, 46a, 46b) est monté axialement et de façon coulissante, lequel piston secondaire est fixé à une tige secondaire (48), la tige principale (28) étant reliée à une unité (40) formant piston principal montée axialement et de façon coulissante dans une chambre (42) du vérin principal (24),
**caractérisé en ce que** l'unité (40) formant piston principal comprend un vérin auxiliaire (38) dans la chambre (36) dont un piston auxiliaire (34), qui est fixé à une deuxième extrémité (32) de ladite tige principale (28), est monté axialement et de façon coulissante, la chambre (36) du vérin auxiliaire (38) étant adaptée pour communiquer, à des côtés opposés respectifs du piston auxiliaire (34), avec la chambre (42) du vérin principal (24) à travers au moins une vanne unidirectionnelle (53) qui est adaptée pour permettre audit fluide de s'écouler depuis la chambre (36) du vérin auxiliaire (38) vers la chambre (42) du vérin principal (24), et avec un conduit de service (52) traversant la tige secondaire (48) dudit au moins un vérin secondaire (26, 26a, 26b), le vérin auxiliaire (38) étant pourvu de moyens de verrouillage (54, 62) pour bloquer le piston auxiliaire (34) par rapport au vérin auxiliaire (38) dans sa position de fin de course sur le côté opposé audit au moins un vérin secondaire (26, 26a, 26b), ledit moyen de blocage comprenant au moins un élément d'obturation (54) déplaçable radialement par rapport à la tige principale (28), et un siège radial (62) du piston auxiliaire (34), qui est adapté pour être recevoir, avec engagement, ledit au moins un élément d'obturation (54), chaque élément d'obturation (54) comprenant une partie de tête élargie (56) à partir de laquelle une partie formant barre (60) s'étend radialement vers la tige principale (28), laquelle partie formant barre (60) est pourvue d'une contre-formation adaptée pour venir en engagement avec ledit siège, à son extrémité opposée à ladite partie de tête (56), ladite partie de tête (56) étant montée de façon coulissante et étanche dans une chambre radiale respective (58) formée dans le corps du vérin auxiliaire (38), laquelle chambre radiale (58) présente une extrémité extérieure radiale, par rapport à la tige principale (28) qui est reliée audit conduit de service (52), et une extrémité interne radiale communiquant avec la chambre (42) du vérin principal (24) par des ouvertures (68) du corps du vérin auxiliaire (38).

2. Actionneur selon la revendication 1, **caractérisé en ce qu'**il comprend une première électrovanne (EV1) et une deuxième électrovanne (EV2) reliées par des conduits respectifs, la première électrovanne (EV1) étant reliée à une première extrémité de la chambre (42) du vérin principal (24), du côté opposé audit au moins un vérin secondaire (26, 26a, 26b), et avec une deuxième extrémité de la chambre (36) du vérin auxiliaire (38), tournée vers ledit au moins un vérin secondaire (26, 26a, 26b) par ledit conduit de service (52), la deuxième électrovanne (EV2) étant reliée à une deuxième extrémité de la chambre (42) du vérin principal (24), tournée vers ledit au moins un vérin secondaire (26, 26a, 26b), ainsi qu'une deuxième extrémité de la chambre (44) d'un vérin secondaire (26), du côté opposé audit vérin principal (24), et avec une première extrémité dudit au moins un vérin secondaire (26, 26a, 26b), tournée vers le vérin principal (24).

3. Actionneur selon la revendication 2, **caractérisé en ce qu'**il comprend une pluralité de vérins secondaires (26, 26a, 26b) dont chacun comprend un piston secondaire respectif (46, 46a, 46b) fixé à une tige secondaire respective (48, 48a, 48b) et monté axialement et de façon coulissante dans une chambre respective (44, 44a, 44b) ayant une première extrémité tournée vers le vérin principal (24) et une deuxième extrémité tournée vers le côté opposé du vérin principal (24), et dans lequel lesdites tiges secondaires (48, 48a, 48b) sont fixées coaxialement l'une à l'autre et sont traversées par ledit conduit de service (52).

4. Actionneur selon la revendication 3, **caractérisé en ce que** ladite deuxième électrovanne (EV2) est reliée à toutes les chambres (44, 44a, 44b) des vérins secondaires (26, 26a, 26b) sur le côté opposé au vérin principal (24), et à la chambre (44) du vérin secondaire (26b) le plus éloigné du vérin principal (24), tourné vers le vérin principal (24), ainsi que de la chambre (42) du vérin principal sur son côté tourné vers lesdits vérins secondaires (26, 26a, 26b).

5. Actionneur selon l'une quelconque des revendications 1 à 4, **caractérisé en ce que** lesdits moyens de verrouillage comprennent une paire d'éléments d'obturation (54) disposés à des côtés diamétralement opposés par rapport à la tige principale (28).

6. Actionneur selon l'une quelconque des revendications 1 à 5, **caractérisé en ce qu'**une surface avant (66) inclinée par rapport à l'axe de la tige principale (28) est formée sur la surface radialement extérieure du piston auxiliaire (34), et **en ce que** ladite contre-formation de la partie formant barre (60) de chaque élément d'obturation (54) présente une surface inclinée correspondante, grâce à quoi lesdits éléments d'obturation (54), en fonctionnement, ont un mouvement le long de la direction radiale extérieure par rapport à la tige principale (28), en conséquence du déplacement axial de la tige principale (28) et de l'engagement de glissement mutuel entre les surfaces de contact inclinées des contre-formations des parties formant barre (60) des éléments d'obturation (54) et de la surface avant inclinée (66) du piston auxiliaire (34).

7. Actionneur selon l'une quelconque des revendications 1 à 6, **caractérisé en ce que** ladite première extrémité (30) de la tige principale (28) comporte une partie filetée qui peut être engagée dans un filetage interne (31) relié à un organe de commande pour commander la position relative desdits bras (20a, 20b) de support d'électrode, et **en ce que** la deuxième extrémité (32) de la tige principale (28) présente une formation de manoeuvre (33) apte à être actionnée pour provoquer une rotation de la tige principale (28) autour de son propre axe pour ajuster finement une position relative des bras du support d'électrode (20a, 20b) du pistolet de soudage (10) pouvant être atteints en l'absence d'un couvercle amovible (64) du corps de l'actionneur (12) à son extrémité axiale opposée au vérin principal (24).
